# EUROPÄISCHE PATENTSCHRIFT

(11) **EP 0 420 018 B1**
(45) Veröffentlichungstag und Bekanntmachung des Hinweises auf die Patenterteilung: **22.06.1994**
(21) Anmeldenummer: 90117976.2
(22) Anmeldetag: 19.09.1990
(51) Int. Cl.: B23K 37/04

(54) **Einrichtung zum Zuführen gerundeter Dosenzargen in den Bereich einer Schweisseinheit**
Rounded cans bodies feeding device for a welding unit
Dispositif pour l'amenée de boîtes arrondies à une unité de soudage

(30) Priorität: 29.09.1989 DE 3932551
(43) Veröffentlichungstag der Anmeldung: 03.04.1991
(73) Patentinhaber: Krupp Kunststofftechnik GmbH, 45143 Essen (DE)
(72) Erfinder: Lentz, Norbert, Dr.-Ing., D-4300 Essen 15 (DE); Schmidt, Harald, Dipl.-Ing., D-5163 Langerwehe (DE)
(74) Vertreter: Vomberg, Friedhelm, Dipl.-Phys.

(56) Entgegenhaltungen:
- EP-A- 0 273 135
- US-A- 4 774 391
- PATENT ABSTRACTS OF JAPAN vol. 13, no. 225 (M-830)(3573) 25 Mai 1989,& JP-A-140193 (TOKYO SEIKAN KAISHA) 10 Februar 1989,

## Beschreibung

Die Erfindung betrifft eine Einrichtung zum Zuführen gerundeter Dosenzargen in den Bereich einer Schweißeinheit, unter deren Einwirkung die Längsränder der Dosenzargen über eine Längsnaht miteinander verbunden werden, mit einem sich in Förderrichtung erstreckenden Unterarm und einer an diesem befestigten Schiene, in deren Längsnuten die Längsränder geführt sind, mit einer oberhalb der Dosenzargen gehaltenen, umlaufenden Transporteinheit mit Mitnehmern, die um quer zur Förderrichtung angeordnete Schwenkachsen beweglich an der Transporteinheit befestigt sind und sich über eine Steuerfläche an einer der Transporteinheit zugewandten Führungsbahn abstützen. Die gleichmäßig über den Umfang der Transporteinheit verteilten Mitnehmer weisen Mitnehmerflächen auf, die beim Einlauf in den Mitnahmeabschnitt der Transporteinheit senkrecht zur Förderrichtung verlaufend neben den Längsrändern an der Rückseite einer Dosenzarge zur Anlage bringbar sind. Die Führungsbahn ist auf ihrer dem Mitnahmeabschnitt entsprechenden Seite derart ausgebildet, daß die Mitnahmeflächen ihre zur Förderrichtung senkrechte Stellung auch beim Auslauf aus dem Mitnahmeabschnitt zeitweilig beibehalten.

Bei einer bekannten Einrichtung der eingangs erwähnten Gattung (DE-PS 27 48 910) setzt sich die Transporteinheit aus zwei parallel zueinander angeordneten Endlosketten zusammen; die mit diesen mitbewegten, als Klinken ausgebildeten Mitnehmer sind jeweils in einem Abstand voneinander angeordnet, der größer ist als die Länge der Dosenzargen in Förderrichtung.
Für die Weiterbehandlung der Dosenzargen ist es von ausschlaggebender Bedeutung, daß die Mitnehmer beider Endlosketten einander paarweise jeweils in einer Ebene gegenüberliegen, die bezüglich beider Endlosketten exakt rechtwinklig ausgerichtet ist. Nur unter dieser Voraussetzung lassen sich die Längsränder der Dosenzargen ohne Versatz miteinander verschweißen mit der Folge, daß auch die Stirnseiten (d. h. die Vorder- und die Rückseite) der Dosenzargen jeweils exakt in einer zur Dosenzargen-Längsachse senkrechten Ebene liegen und dementsprechend später Böden und Deckel störungsfrei sowie dicht angebracht werden können. Bei der in Rede stehenden Ausführungsform ist die Lage der beiden Endlosketten mittels stufenlos einstellbarer Kupplungen zwar in der Weise beeinflußbar, daß die paarweise zusammengehörigen Mitnehmer einander im Bereich der Kettenräder genau gegenüberliegen. Damit ist jedoch noch nicht sichergestellt, daß die Dosenzargen den Wirkbereich der Schweißeinheit in einem Zustand erreichen, in dem ihre Längsränder ohne Längsversatz aneinanderliegen. Es ist nämlich nicht zu vermeiden, daß die gegenseitigen Abstände der aufeinanderfolgenden Mitnehmer jeder Endloskette - bedingt durch Herstellungenauigkeiten und/oder durch unterschiedliche Dehnung im Betrieb - Unregelmäßigkeiten aufweisen; selbst wenn derartige Abstandsunterschiede lediglich eine Größenordnung von wenigen zehntel Millimetern aufweisen, können sie dazu führen, daß die geschweißten Dosenzargen infolge Längsversatz ihrer Längsränder nur mit erhöhtem Aufwand weiterverarbeitbar oder sogar unbrauchbar sind.
Mit der EP-PS 0 212 620 ist daher für eine Einrichtung zum Verschweißen der Längsränder gerundeter Dosenzargen der Vorschlag unterbreitet worden, die mit Mitnehmern ausgestatteten Endlosketten mittels Justierschablonen an der Stelle miteinander in Fluchtung zu bringen, an welcher die Stirnseite der Dosenzarge in den Bereich der Schweißeinheit einläuft. Auch bei dieser Ausführungsform kann jedoch nicht ausgeschlossen werden, daß beispielsweise durch Verschleiß der Endlosketten und der Aussparungen der Justierschablonen erneut der bereits erwähnte Versatz auftritt. Ein weiterer, sich aus der Verwendung der Justierschablonen ergebender Nachteil besteht darin, daß die Dosenzargen lediglich der Kettenteilung entsprechend bewegt werden können; es ist also nicht möglich, die Dosenzargen mit dem wünschenswerten Minimalabstand (von vorzugsweise höchstens einem Millimeter) dem Wirkbereich der Schweißeinheit zuzuführen, so daß die erreichbare Schweißgeschwindigkeit nicht in die größtmögliche Schweißnahtlänge umgesetzt werden kann.

Der Erfindung liegt die Aufgabe zugrunde, eine Vorrichtung der eingangs erwähnten Gattung in der Weise auszugestalten, daß Dosenzargen mit hoher Taktzahl versatzfrei dem Wirkbereich einer Schweißeinheit, vorzugsweise einer Laser-Schweißeinheit, zugeführt werden können.
Die Einrichtung soll ggf. auch so beschaffen sein, daß die aufeinanderfolgenden Dosenzargen sich bis zum Einlauf in den Wirkbereich der Schweißeinheit möglichst weitgehend aneinander angenähert haben, d.h. vorzugsweise einen gegenseitigen Abstand in der Größenordnung von weniger als einem Millimeter aufweisen.

Die gestellte Aufgabe wird durch eine Einrichtung mit den Merkmalen des Anspruchs 1 gelöst.
Der sich vom Stand der Technik grundsätzlich unterscheidende Lösungsgedanke besteht darin, die Transporteinheit lediglich aus einem Umlaufelement aufzubauen und die Mitnehmer jeweils als einteilige Schwinge auszugestalten, die an ihrer in Förderrichtung weisenden Vorderseite als Mitnahmefläche zwei Vorschubzapfen aufweist; diese sind in der Mitnahmestellung in der Lage, die in Frage kommende Dosenzarge beiderseits (d.h. links und rechts) neben den Längsrändern liegend, gleichzeitig abzustützen. Jeweils einer der Schwingen-Schenkel kann einen sich über die Schwenkachse der Schwinge hinaus erstreckenden Steuerarm aufweisen, an dem eine an der Führungsbahn anliegende Steuerfläche angebracht ist. Der Erfindung liegt dabei die Erkenntnis zugrunde, daß die Summe der Toleranzen zwischen den vorschiebenden Zapfen der Mitnehmer Null sein muß, daß die Mitnehmer an einem möglichst gleichförmig umlaufenden Umlaufelement angebracht sein müssen und daß nur ein zentral angeordnetes Umlaufelement zur Anwendung kommen darf, damit die eingangs erwähnten Abweichungen bzw. Fehler sich nicht als Fluchtungsfehler auswirken können.

Da die auf der rechten und linken Seite an einer Dosenzarge angreifenden Vorschubzapfen jeweils Bestand teil ein und derselben Schwinge sind, kann ein Relativversatz zwischen den beiden Vorschubzapfen und damit ein Längsversatz der Dosenzargen-Längsränder nur noch dann auftreten, wenn die Mitnehmerschwinge in der Lage ist, sich um eine senkrecht zur Transportrichtung stehende Achse zu bewegen. Das kann durch verdrehsichere Befestigung an einem in Förderrichtung steifen Förderelement oder durch Gleiten der Mitnehmerschwinge in einem zusätzlichen Langsführungselement verhindert werden. Eine etwaige, durch Verschleiß und/oder Dehnung verursachte Abmessungsänderung des Umlaufelements beeinflußt lediglich den gegenseitigen Abstand der Schwingen, wirkt sich aber nicht als Versatz der Mitnehmer untereinander aus.

Vorzugsweise ist das Umlaufelement in der Weise angeordnet und ausgebildet, daß unter seiner Einwirkung jede Dosenzarge soweit in Förderrichtung mitgeführt wird, bis ein Teil der Längsnaht - vorzugsweise mit einer Länge bis zu mehreren Millimetern - vorliegt (Anspruch 2).
Der Mitnahmeabschnitt des Umlaufelements sollte dabei bezüglich der Lage der Schweißeinheit so bemessen sein, daß die hergestellte Längsnaht eine Länge zwischen 1 bis 3 mm aufweist, bevor die Vorschubzapfen von der in Frage kommenden Dosenzarge freigesetzt werden.

Weiterhin ist die Schwinge - in der Seitenansicht gesehen - winkelförmig und - in Draufsicht gesehen - U-förmig ausgebildet (Anspruch 3). Der gegenseitige Abstand der Vorschubzapfen kann dabei kleiner sein als derjenige der Schwingen-Schenkel (Anspruch 4).

Soweit die erfindungsgemäße Einrichtung beiderseits des Unterarms angeordnete Vorschubkettentriebe aufweist, deren Mitnahmezinken seitlich in den Bereich der Dosenzargen-Wand vorkragen, ist das Umlaufelement mittels einer Schalteinheit bezüglich der Vorschubkettentriebe in der Weise einstellbar, daß seine Schwingen gegenüber den gleichgerichtet mitbewegten Mitnahmezinken einen Vorlauf in der Größenordnung bis zu mehreren Millimetern, vorzugsweise zwischen 1 bis 2 mm, aufweisen (Anspruch 5). Der beispielsweise mittels einer stufenlos einstellbaren Kupplung herbeigeführte Vorlauf hat zur Folge, daß ein Ablösen der Dosenzargen von den Mitnahmezinken der seitlichen Kettentriebe erfolgt. Die Ausgestaltung von Vorschubkettentrieben, die zweckmäßigerweise rechts und links in Höhe der Längsachse bzw. Querebene der Dosenzargen angebracht sind, ist beispielsweise aus der DE-PS 36 15 706 bekannt.
Im Rahmen der Erfindung können die seitlichen Vorschubkettentriebe in der Weise ausgestaltet sein, daß sie sich in Förderrichtung über den Bereich der Schweißeinheit und entgegen der Förderrichtung über den Bereich der Umlaufeinheit hinaus erstrecken (Anspruch 6); in diesem Fall ist der Mitnahmeabschnitt der Vorschubkettentriebe in jedem Falle erheblich länger bemessen als derjenige des zentral angeordneten Umlaufelements.
Die Vorschubkettentriebe können jedoch auch in der Weise angeordnet sein, daß ihr rückwärtiger (der Förderbewegung entgegengerichteter) Endabschnitt im Auslaufbereich des Umlaufelements liegt (Anspruch 7); in diesem Fall dienen die Vorschubkettentriebe lediglich dazu, die Dosenzargen aus dem Wirkbereich der Schweißeinheit wegzufördern und einer sich ggf. anschließenden weiteren Bearbeitungsstation, beispielsweise einer Nahtlackierungseinheit, zuzuführen.

Dem Umlaufelement können in Förderrichtung auch zwei in Förderrichtung aufeinanderfolgende Reibrollenpaare mit angetriebener Oberrolle zugeordnet sein, wobei das erste Reibrollenpaar vor und das zweite Reibrollenpaar hinter dem Bereich der Schweißeinheit angeordnet und die Oberrolle des ersten Reibrollenpaares mit einer Freilaufkupplung versehen ist (Anspruch 8).
Die Geschwindigkeit der Schwingen in Förderrichtung relativ zur Umfangsgeschwindigkeit der Reibrollen sollte dabei in etwa um den Prozentsatz größer sein wie der gegenseitige Abstand der Schwingen die Länge der Dosenzargen in Förderrichtung übersteigt (Anspruch 9). Mit der Annäherung jeder Schwinge an das Ende des Mitnahmeabschnitts sinkt - bedingt durch die Auslaufbewegung der zugehörigen Steuerfläche an der Führungsbahn - die Geschwindigkeit der erfaßten Dosenzarge in Förderrichtung geringfügig ab, bis sie im Übergabepunkt hinter dem Wirkbereich der Schweißeinheit (d.h. nach Herstellung einer Längsnaht in der Größenordnung von bis zu mehreren Millimetern) mit der der Schweißgeschwindigkeit entsprechenden Umfangsgeschwindigkeit der Reibradpaare übereinstimmt.

Eine Ausführungsform des Erfindungsgegenstandes ist dadurch gekennzeichnet, daß das Umlaufelement als Endloskette mit Lagerböcken ausgebildet ist, an denen sich die Schwingen über ihre Schenkel abstützen (Anspruch 10).
Die Endloskette kann dabei insbesondere in Form einer Laschen- oder Rollenkette vorliegen, die in ansich bekannter Weise zumindest an einem Antriebsrad und einem Spannrad abgestützt ist.
Mit Rücksicht auf die Auswirkungen, die mit der Verwendung lediglich eines zentralen Umlaufelements im Zusammenhang stehen, kommt jedoch auch der Einsatz eines Stahlbandes oder dergleichen in Betracht.
Der Erfindungsgegenstand kann jedoch als Umlaufelement auch eine rotierende Scheibe aufweisen, an der sich die Schwingen über ihre Schenkel abstützen (Anspruch 11).
Der Durchmesser dieser Scheibe kann dabei insbesondere derart bemessen sein, daß jeweils nur eine Schwinge eine entsprechend kurz bemessene Vorschubbewegung in Förderrichtung ausführt.
Auch ein Umlaufelement in Form eines biegeelastischen Riemens in Kombination mit einer Parallelführung der Schwingen ist möglich.

Die Erfindung wird nachfolgend anhand der Zeichnung im einzelnen erläutert, in der stark schematisiert mehrere Ausführungsbeispiele dargestellt sind.
Es zeigen:
- Fig. 1: eine Teil-Seitenansicht einer Dosenschweißmaschine mit einer Einrichtung zum Zuführen gerundeter Dosenzargen, einer Schweißeinheit und seitlich angeordneten Vorschubkettentrieben,
- Fig. 2: in gegenüber Fig. 1 vergrößertem Maßstab einen Schnitt nach Linie II-II in Fig. 1,
- Fig. 3: in perspektivischer Darstellung den Aufbau eines als Schwinge ausgebildeten Mitnehmers im Zusammenwirken mit einer Dosenzarge,
- Fig. 4: eine Teil-Seitenansicht einer Dosenschweißmaschine, die als Umlaufelement eine rotierende Scheibe aufweist,
- Fig. 5: eine Teil-Seitenansicht einer Dosenschweißmaschine mit einem besonders lang ausgebildeten Umlaufelement und lediglich im Bereich der Schweißeinheit angeordneten seitlichen Vorschubkettentrieben und
- Fig. 6: eine Teil-Seitenansicht einer Dosenschweißmaschine, die ein Umlaufelement und im Bereich der Schweißeinheit angeordnete Reibrollenpaare aufweist.

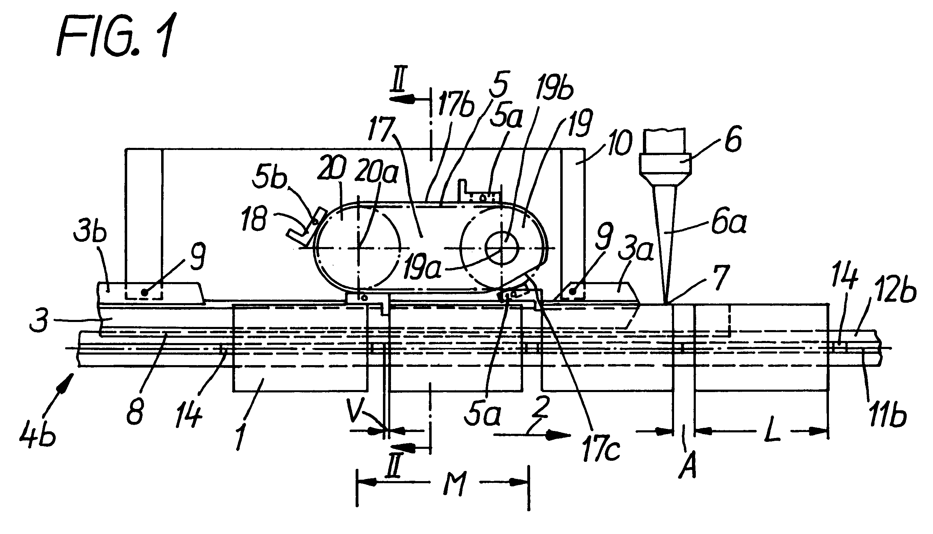

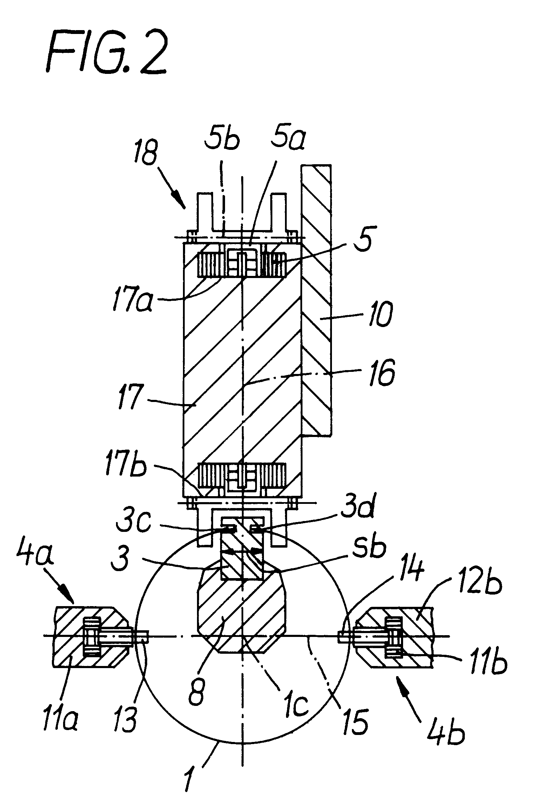

Die in Fig. 1 teilweise dargestellte Dosenschweißmaschine dient dazu, in einem vorausgehenden Arbeitsgang hergestellte gerundete Dosenzargen 1, die sich in Förderrichtung (Pfeil 2) von links nach rechts bewegen und sich mit ihren Seitenrändern 1 a, 1 b verschiebbar an einer Schiene 3 abstützen, mittels zweier Vorschubkettentriebe 4 a, 4 b (vgl. dazu auch Fig. 2) in den Bereich des Mitnahmeabschnitts (angedeutet durch die Längenabmessung M eines Umlaufelements 5 zu befördern und über dieses dem Wirkbereich einer Schweißeinheit 6 zuzuführen; diese erzeugt mittels eines gebündelten Laserstrahls 6 a eine Längsnaht 7, welche die Längsränder 1 a, 1 b der Dosenzargen in ansich bekannter Weise miteinander verbindet. Im Aschluß an den Schweißvorgang wird die in Frage kommende geschweißte Dosenzarge erneut von den Vorschubkettentrieben 4 a, 4 b erfaßt und in Förderrichtung (Pfeil 2) der weiteren Bearbeitung, beispielsweise in einer nicht dargestellten Nahtlackierungsvorrichtung, zugeführt.

Die Schiene 3, die an der Oberseite eines in Förderrichtung gesehen länger ausgebildeten Unterarms 8 angebracht ist, weist an ihrer Vorderseite im Bereich zwischen der Schweißeinheit 6 sowie dem Umlaufelement 5 und an ihrer Rückseite jeweils ein Befestigungsblech 3 a bzw. 3 b auf, welches über eine lösbare Verbindung 9 mit einem Gestell 10 in Verbindung steht.
In dem dargestellten Ausführungsbeispiel ist die Schiene 3 als Schwertschiene für Stumpfstoßschweißung ausgebildet, d.h. sie weist an ihrer dem Umlaufelement 5 zugewandten Oberseite zwei Längsnuten 3 c, 3 d auf, die sich in gleicher Höhe gegenüberliegen und in denen sich der Längsrand 1 a bzw. 1 b in Förderrichtung verschiebbar abstützt.

Die Vorschubkettentriebe 4 a, 4 b bestehen jeweils aus einer endlosen Rollenkette 11 a bzw. 11 b, die in einem ortsfesten Führungskäfig 12 a bzw. 12 b außerhalb des Durchmessers der Dosenzargen 1 umlaufen und in regelmäßigen Abständen Mitnahmezinken 13 bzw. 14 aufweisen. Deren Länge ist so bemessen, daß sie im Bereich des Vorschubabschnitts der Vorschubkettentriebe in Richtung auf die Dosenzargen-Längsachse 1 c vorkragen, also die in Frage kommenden Dosenzargen ggf. erfassen und vorschieben können (vgl. Fig. 2).
Die Führungskäfige 12 a, 12 b sind derart ausgerichtet, daß sie sich in Höhe der Längsachse 1 c in einer Querebene 15 gegenüberliegen; diese verläuft ihrerseits senkrecht zu einer Längsmittelebene 16 durch die Schiene 3 und die Längsachse 1 c.

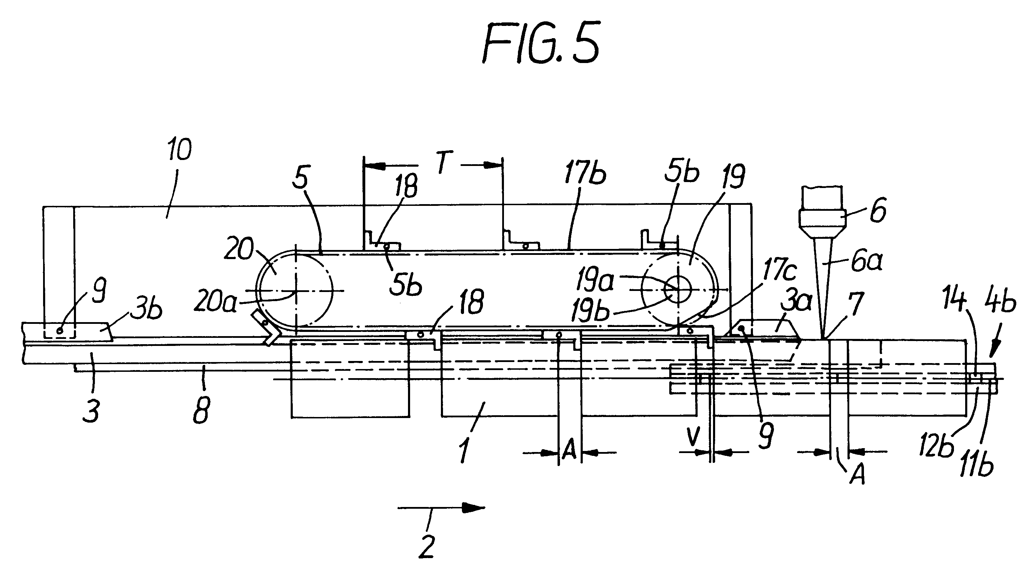

Im Gegensatz zum Stand der Technik ist zum exakten Ausrichten und Zuführen der Dosenzargen 1 in den Wirkbereich der Schweißeinheit 6 eine einzige Transporteinheit, nämlich das bereits erwähnte Umlaufelement in Form einer gleichmäßig umlaufenden, endlosen Rollenkette 5 vorhanden, die mit Abstand oberhalb der Schiene 3 in einem am Gestell 10 gehaltenen Grundkörper 17 umläuft und deren Längsmittelebene mit der Längsmittelebene 16 zusammenfällt. Der Bewegungsspiel raum der Rollenkette 5 ist dabei durch eine Rollenbahn 17 a im Grundkörper festgelegt (Fig. 2).
Die Rollenkette 5 weist in gleichmäßigen Abständen (entsprechend der in Fig. 5 mit T bezeichneten Teilung) Lagerböcke 5 a auf, an denen um Schwenkachsen 5 b bewegliche Mitnehmer gehalten sind. Diese sind - in der in Fig. 1 dargestellten Mitnahmestellung in Draufsicht betrachtet - als U-förmige Schwinge 18 ausgebildet, deren Schenkel 18 a und 18 b in der Mitnahmestellung der Förderrichtung (Pfeil 2 in Fig. 1) entgegengerichtet sind. Jede Schwinge weist an ihrer in Förderrichtung weisenden Vorderseite als Mitnahmefläche zwei Vorschubzapfen 18 c, 18 d auf, deren gegenseitiger Abstand za größer als die Schienen-Breite sb und kleiner als der gegenseitige Abstand sa der SchwingenSchenkel 18 a, 18 b ist.
Die Vorschubzapfen 18 c und 18 d sind im übrigen bezüglich der Schenkel 18 a und 18 b senkrecht ausgerichtet, so daß die Schwinge 18 - in Seitenansicht gesehen - winkelförmig ausgebildet ist.

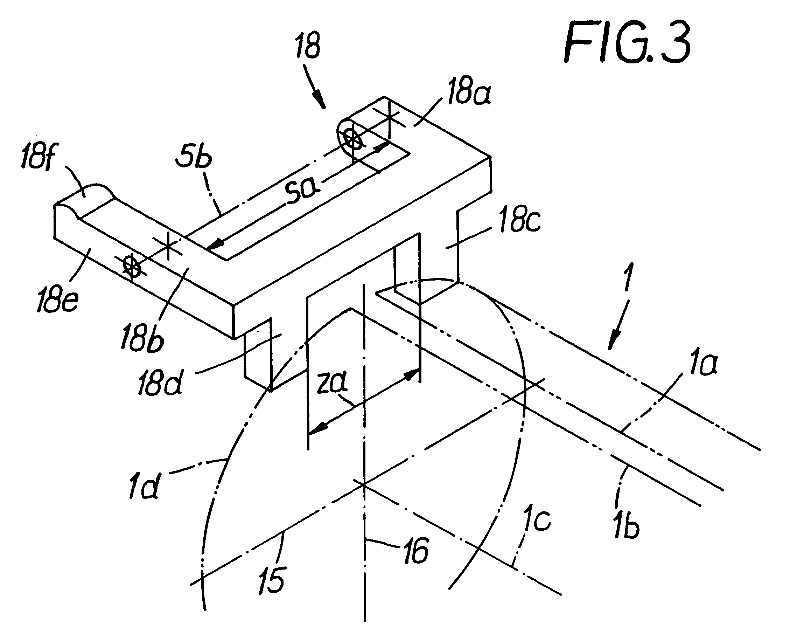

Wie die Darstellung gemäß Fig. 3 erkennen läßt, ist die Länge der Vorschubzapfen 18 c und 18 d so bemessen, daß diese sich in der Mitnahmestellung beiderseits der Längsränder 1 a, 1 b an der Rückseite 1 d der zu befördernden Dosenzarge 1 abstützen.
Bedingt dadurch, daß die Vorschubzapfen starrer Bestandteil eines einteiligen, beiderseits der Längsränder 1 a, 1 b wirksamen Mitnehmers sind, lassen sich die Dosenzargen dem Wirkbereich der Schweißeinheit 6 in einem Zustand zuführen, in dem ihre Längsränder ohne Längsversatz aneinanderliegen. Durch den Einsatz der Schwingen 18 ist also gewährleistet, daß beispielsweise die durch die Rückseite 1 d der Dosenzarge 1 festgelegte Ebene Während des Zuführvorgangs exakt senkrecht zur Längsachse 1 c ausgerichtet bleibt.
Der Schwingenschenkel 18 b weist einen sich über die Schwenkachse 5 b hinauserstreckenden Steuerarm 18 e auf, an dem eine gerundete Steuerfläche 18 f angebracht ist; letztere gleitet bei der Umlaufbewegung auf einer außenliegenden Führungsbahn 17 b des Grundkörpers 17 und erzwingt dadurch die gewünschte Ausrichtung der Schwinge 18.
Die Rollenkette 5 wird mittels eines Antriebsrades 19 und eines Spannrades 20 umgelenkt, die im Gegenuhrzeigersinn um ortsfeste Achsen 19 a bzw. 20 a umlaufen; das Antriebsrad 19 steht dabei über eine stufenlos einstellbare Kupplung 19 b mit einem nicht dargestellten Antrieb in Verbindung.
Auslaufseitig, d.h. im Bereich des Antriebsrades 19, weist die Führungsbahn 17 b einen schrägverlaufenden, annähernd geradlinigen Auslaufabschnitt 17 c auf. Dieser ist so ausgestaltet, daß die Schwingen 18 bei der Umlenkung der Rollenkette 5 um das Antriebsrad 19 über einen begrenzten Drehwinkel hinweg ihre Mitnahmestellung beibehalten, in welcher die Vorschubzapfen senkrecht angeordnet sind.

Fig. 1 läßt erkennen, daß der gegenseitige Abstand aufeinanderfolgender Schwingen 18, der mit demjenigen aufeinanderfolgender Mitnahmezinken 13 bzw. 14 übereinstimmt, sich aus der Länge L der Dosenzargen 1 und deren gegenseitigem Abstand A zusammensetzt.
Durch Betätigen der Kupplung 19 b läßt sich die Lage der Schwingen 18 derart verändern, daß diese bezüglich der Mitnahmezinken 13 bzw. 14 einen in Förderrichtung liegenden Vorlauf V in der Größenordnung von knapp zwei Millimetern aufweisen.
Diese Maßnahme hat zur Folge, daß die in Frage kommenden Dosenzargen im Bereich des Mitnahmeabschnitts M lediglich an den Schwingen 18 anliegen und dabei die gewünschte exakte Ausrichtung ohne Fluchtungsfehler erfahren.
Erst mit der Annäherung der Schwingen an das Antriebsrad 19 sinkt die Fördergeschwindigkeit unter dem Einfluß des Auslaufabschnitts 17 c geringfügig ab, so daß der Vorlauf V verloren geht und die Mitnahmezinken 13 bzw. 14 wieder an der Rückseite der in Frage kommenden Dosenzargen zur Anlage kommen.
Der Mitnahmeabschnitt M ist dabei erfindungsgemäß derart bemessen und angeordnet, daß die Dosenzargen erst dann wieder von den Schwingen 18 freigesetzt und von den Mitnahmezinken 13 bzw. 14 weiterbefördert werden, wenn unter Einwirkung des Laserstrahls 6 a bereits eine Längsnaht 7 mit einer Länge von knapp drei Millimetern hergestellt worden ist. Auf diese Weise ist sichergestellt, daß die der exakten Ausrichtung dienenden Schwingen 18 solange wirksam bleiben, bis die bereits vorhandene Längsnaht die Entstehung eines unerwünschten Versatzes zwischen den Dosenzargen-Längsrändern 1 a und 1 b ausschließt.

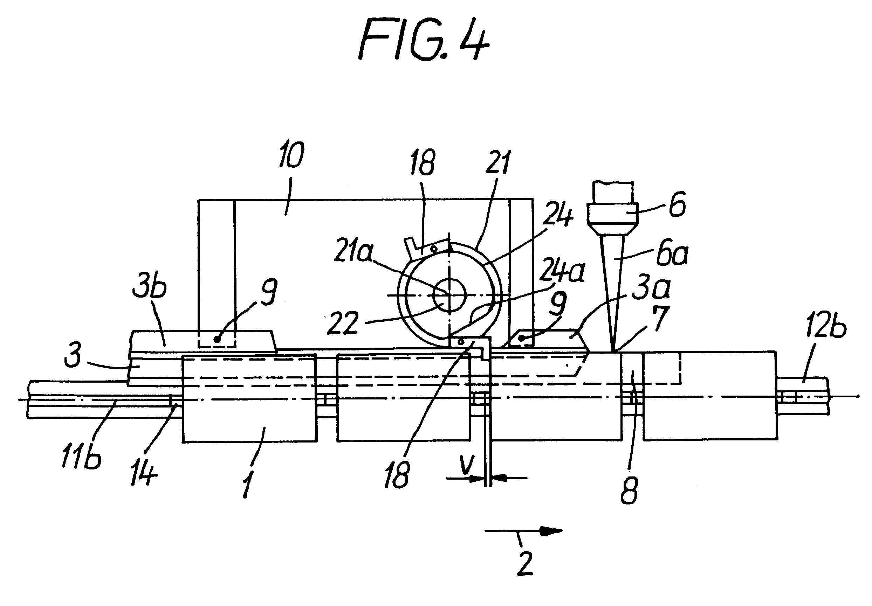

Das zentral oberhalb der Schiene 3 angeordnete Umlaufelement kann auch aus einer Scheibe 21 bestehen, die im Gegenuhrzeigersinn im eine ortsfeste Achse 21 a umläuft und unter Zwischenschaltung einer stufenlos einstellbaren Kupplung 22 mit einem nicht dargestellten Antrieb in Verbindung steht (Fig. 4).
Im Gegensatz zu der zuvor beschriebenen Ausführungsform sind an der Scheibe 21 zwei Schwingen 18 schwenkbar gehalten, die in der bereits beschriebenen Weise durch Abstützung an einer Führungsbahn 24 ausgerichtet werden. Diese weist auf der der Schweißeinheit 6 zugewandten Seite wiederum einen schrägverlaufenden, annähernd geradlinigen Auslaufabschnitt 24 a auf.

Der gegenseitige Abstand der Schwingen 18, die dementsprechend um einen Winkel von 180 ° gegeneinander versetzt sind, ist so bemessen, daß er mit dem gegenseitigen Abstand der in Förderrichtung (Pfeil 2) aufeinanderfolgenden Mitnahmezinken 14 (und 13; vgl. dazu Fig. 2) übereinstimmt.
Die Arbeitsweise der in Rede stehenden Ausführungsform stimmt im übrigen mit derjenigen gemäß Fig. 1 überein mit dem zusätzlichen Unterschied, daß jeweils lediglich eine der beiden Schwingen 18 mit einer Dosenzarge 1 im Eingriff steht und diese dem Wirkbereich der Schweißeinheit 6 soweit zuführt, daß diese eine Längsnaht mit einer Länge der Größenordnung von wenigen Millimetern erzeugen kann.

Die Ausführungsform gemäß Fig. 5 unterscheidet sich lediglich in zweierlei Hinsicht von derjenigen gemäß Fig. 1:
Zum einen ist das Umlaufelement bestehend aus der Rollenkette 5 erheblich länger ausgebildet und weist dementsprechend sieben Schwingen 18 auf, von denen jeweils drei mit aufeinanderfolgenden Dosenzargen 1 im Eingriff stehen.
Zum anderen sind die seitlich angeordneten Vorschubkettentriebe, also beispielsweise der dargestellte Vorschubkettentrieb 4 b, in der Weise angeordnet, daß sie sich in Förderrichtung (Pfeil 2) über den Wirkbereich der Schweißeinheit 6 hinaus erstrecken, ihr rückwärtiger Endabschnitt jedoch mit dem Auslaufbereich der Rollenkette 5 zusammenfällt, in dem die Schwingen 18 unter Einwirkung des Auslaufabschnitts 17 c von den in Frage kommenden Dosenzargen 1 freigesetzt werden.
Bedingt durch ihre größere Längserstreckung kann die Rollenkette 5 mit den zugehörigen Schwingen 18 in größeren Umfang gleichzeitig auch Förderaufgaben übernehmen. Die Verlagerung der Vorschubkettentriebe in Förderrichtung nach rechts gestattet es, diese bei ansonsten unveränderten Arbeitsbedingungen kürzer auszubilden.

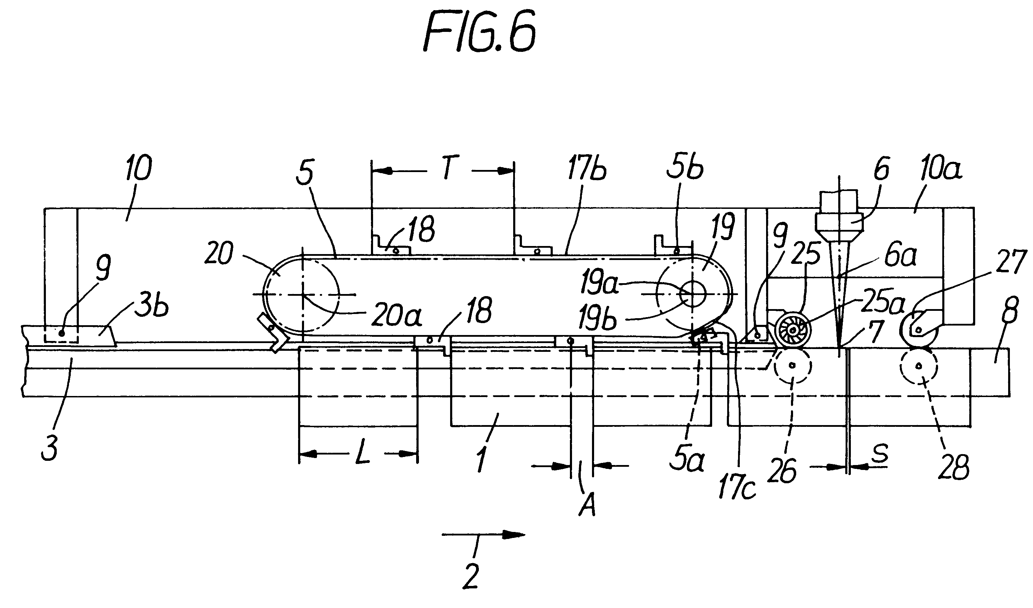

Die Ausführungsform gemäß Fig. 6 unterscheidet sich im wesentlichen nur dadurch von der zuvor beschriebenen Ausführungsform, daß die seitlichen Vorschubkettentriebe durch zwei Reibrollenpaare 25, 26 bzw. 27, 28 ersetzt sind, deren Oberrolle 25 bzw. 27 jeweils angetrieben ist und die - in Förderrichtung (Pfeil 2) gesehen - vor bzw. hinter der Schweißeinheit 6 liegen. Die Oberrolle 25 ist dabei zusätzlich mit einer Freilaufkupplung 25 a ausgestattet; diese ermöglicht es, die Umfangsgeschwindigkeit des ersten Reibrollenpaares 25, 26 an die sich während der Förderbewegung der Dosenzargen 1 ändernde Fördergeschwindigkeit anzupassen. Während die Oberrolle 27 des zweiten Reibrollenpaares an einer Verlängerung 10 a des Gestells 10 angebracht ist, sind die Unterrollen 26 und 28 jeweils drehbar an dem Unterarm 7 gelagert.

Erfindungsgemäß ist die Geschwindigkeit der Schwingen 18 in Förderrichtung relativ zur Umfangsgeschwindigkeit der Reibrollen annähernd um den Prozentsatz größer eingestellt als der gegenseitige Abstand der Schwingen 18 (Teilung T) die Länge L der Dosenzargen 1 in Förderrichtung übersteigt.
Durch eine derartige Auslegung der zusammenwirkenden Antriebsbestandteile (Rollenkette 5, Reibrollenpaare 25, 26 und 27, 28) ist es möglich, den Abstand A im Wirkbereich der Schwingen 18 auf einen Minimalwert S (in der Größenordnung von weniger als 1 mm) im Wirkbereich der Schweißeinheit 6 herabzusetzen.

Der damit erzielte Vorteil besteht darin, daß mit der erreichbaren Schweißgeschwindigkeit, an welche die Umfangsgeschwindigkeit der Reibrollenpaare angepaßt ist, die größtmögliche Schweinahtlänge hergestellt und damit der größtmögliche Dosendurchsatz erzielt werden kann.

Der mit der Erfindung erzielte Vorteil besteht insbesondere darin, daß die Zuführbewegung der zu verschweißenden Dosenzargen bis hinter den Wirkbereich der Schweißeinheit mittels eines zentral angeordneten Umlaufelements erfolgt, dessen an den Dosenzargen abstützbare Schwingen mit den zugehörigen Vorschubzapfen einteilig ausgebildet sind. Der Mitnahmeabschnitt, über dessen Länge die Dosenzargen von den Schwingen vorgeschoben werden, ist dabei so bemessen, daß bereits eine Längsnaht erzeugt worden ist, bevor die Schwingen von den Dosenzargen freigesetzt werden. Durch die in Rede stehende Ausbildung ist sichergestellt, daß die Längsränder der Dosenzargen den Wirkbereich der Schweißeinheit ohne Versatz in Längsrichtung erreichen.
Bedingt durch die Ausgestaltung des Umlaufelements und der Schwingen läßt sich weiterhin die Vorschubbewegung der Dosenzargen in der Weise einstellen, daß der gegenseitige Abstand aufeinanderfolgender Dosenzargen bis zum Einlauf in den Wirkbereich der Schweißeinheit auf einen Minimalwert herabgesetzt und damit die erreichbare Schweißleistung weitestgehend ausgenutzt werden kann.

## Patentansprüche

1. Einrichtung zum Zuführen gerundeter Dosenzargen (1) in den Bereich einer Schweißeinheit, unter deren Einwirkung die Längsränder (1a,1b) der Dosenzargen (1) über eine Längsnaht miteinander verbunden werden, mit einem sich in Förderrichtung erstreckenden Unterarm (8) und einer an diesem befestigten Schiene (3), in deren Längsnuten (3c,3d) die Längsränder geführt sind, mit einer oberhalb der Dosenzarge (1) gehaltenen, umlaufenden Transporteinheit mit Mitnehmern, die um quer zur Förderrichtung (2) angeordnete Schwenkachsen (5b) beweglich an der Transporteinheit befestigt sind und sich über eine Steuerfläche (18f) an einer der Transporteinheit zugewandten Führungsbahn (17b) abstützen, wobei die gleichmäßig über den Umfang der Transporteinheit verteilten Mitnehmer Mitnehmerflächen (18c,18d) aufweisen, die beim Einlauf in den Mitnahmeabschnitt der Transporteinheit senkrecht zur Förderrichtung verlaufend neben den Längsrändern an der Rückseite einer Dosenzarge (1) zur Anlage bringbar sind, und wobei die Führungsbahn (17b) auf ihrer dem Mitnahmeabschnitt entsprechenden Seite derart ausgebildet ist, daß die Mitnahmeflächen ihre zur Förderrichtung senkrechte Mitnahmestellung auch beim Auslauf aus dem Mitnahmeabschnitt zeitweilig beibehalten, **dadurch gekennzeichnet**,
- daß die Mitnehmer mit ihren seitlich angreifenden Mitnehmerflächen einteilig sind
- daß die Transporteinheit lediglich aus einem Umlaufelement (5; 21) besteht,
- daß die Mitnehmer, deren gegenseitiger Abstand (L+A) größer ist als die Länge (L) der Dosenzarge (1) in Förderrichtung, als Schwinge (18) ausgebildet sind, welche über die Schwenkachsen (5 b) mit dem Umlaufelement (5; 21) in Verbindung steht;
- daß die Schwinge (18) an ihrer in Förderrichtung weisenden Vorderseite als Mitnahmefläche zwei Vorschubzapfen (18 c, 18 d) aufweist, deren gegenseitiger Abstand (za) größer ist als die Schienen-Breite (sb) und die in der Mitnahmestellung beiderseits neben den Längsrändern (1 a, 1 b) liegend gleichzeitig an einer Dosenzarge (1) abstützbar sind, und
- daß die Schwinge einen sich über die Schwenkachse (5 b) hinauserstreckenden Steuerarm (18 e) aufweist, an dem die Steuerfläche (18 f) angebracht ist.

2. Einrichtung nach Anspruch 1, gekennzeichnet durch eine Anordnung und Ausbildung des Umlaufelements (5; 21), auf Grund derer unter seiner Einwirkung jede Dosenzarge (1) soweit in Förderrichtung (Pfeil 2) mitgeführt wird, bis bereits ein Teil der Längsnaht (7) - vorzugsweise mit einer Länge bis zu mehreren Millimetern - vorliegt.

3. Einrichtung nach einem der Ansprüche 1 bis 2, dadurch gekennzeichnet, daß die Schwinge (18) - in der Seitenansicht gesehen - winkelförmig und - in der Mitnahmestellung in Draufsicht betrachtet - U-förmig mit der Förderrichtung (Pfeil 2) entgegengerichteten Schenkeln (18a, 18b) ausgebildet ist.

4. Einrichtung nach einem der Ansprüche 1 bis 3, dadurch gekennzeichnet, daß der gegenseitige Abstand (za) der Vorschubzapfen (18 c, 18 d) kleiner ist als derjenige (sa) der SchwingenSchenkel (18 a, 18 b).

5. Einrichtung nach einem der Ansprüche 1 bis 4, mit beiderseits des Unterarms angeordneten Vorschubkettentrieben, deren Mitnahmezinken seitlich in den Bereich der Dosenzargen-Wand vorkragen, **dadurch gekennzeichnet**, daß das Umlaufelement (5; 21) mittels einer Schalteinheit (19 b; 22) bezüglich der Vorschubkettentriebe (4 a, 4 b) in der Weise einstellbar ist, daß seine Schwingen (18) gegenüber den gleichgerichtet mitbewegten Mitnahmezinken (13 bzw. 14) einen Vorlauf (V) in der Größenördnung bis zu mehreren Millimetern, vorzugsweise zwischen ein bis zwei Millimetern, aufweisen.

6. Einrichtung nach Anspruch 5, dadurch gekennzeichnet, daß die Vorschubkettentriebe (4 a, 4 b) sich in Förderrichtung (Pfeil 2) über den Bereich der Schweißeinheit (6) und entgegen der Förderrichtung über den Bereich des Umlaufelements (5; 21) hinauserstrecken.

7. Einrichtung nach Anspruch 6, dadurch gekennzeichnet, daß der rückwärtige Endabschnitt der Vorschubkettentriebe (4 a, 4 b), die sich in Förderrichtung (Pfeil 2) über den Bereich der Schweißeinheit (6) hinauserstrecken, im Auslaufbereich des Umlaufelements (5; 21) liegt.

8. Einrichtung nach einem der Ansprüche 1 bis 4, mit zwei in Förderrichtung aufeinanderfolgenden Reibrollenpaaren mit angetriebener Oberrolle, wobei das erste Reibrollenpaar vor und das zweite Reibrollenpaar hinter dem Bereich der Schweißeinheit angeordnet ist, **dadurch gekennzeichnet**, daß die angetriebene Rolle (25) des ersten Reibrollenpaares (25, 26) mit einer Freilaufkupplung (25 a) versehen ist.

9. Einrichtung nach Anspruch 8, dadurch gekennzeichnet, daß die Geschwindigkeit der Schwingen (18) in Förderrichtung (Pfeil 2) relativ zur Umfangsgeschwindigkeit der Reibrollen (25 bis 28) in etwa um den Prozentsatz größer eingestellt ist wie der gegenseitige Abstand (L+A) der Schwingen (18) die Länge (L) der Dosenzargen (1) in Förderrichtung übersteigt.

10. Einrichtung nach einem der Ansprüche 1 bis 9, dadurch gekennzeichnet, daß das Umlaufelement als Endloskette (5) mit Lagerböcken (5 a) ausgebildet ist, an denen sich die Schwingen (18) über ihre Schenkel (18 a, 18 b) abstützen.

11. Einrichtung nach einem der Ansprüche 1 bis 9, dadurch gekennzeichnet, daß das Umlaufelement als rotierende Scheibe (21) ausgebildet ist, an der sich die Schwingen (18) über ihre Schenkel (18 a, 18 b) abstützen.

## Claims

1. Device for feeding rounded can bodies (1) into the area of a welding unit used to join the longitudinal edges (1a, 1b) of the can bodies (1) to one another by a longitudinal seam, having a lower arm (8) extending in transport direction and a rail (3) secured thereto, into the longitudinal grooves (3c, 3d) of which the longitudinal edges are guided, having a revolving transport unit, which is held above the can bodies (1) and is provided with carriers, which are secured to the transport unit to move about swivelling axes (5b) disposed obliquely to the transport direction (2) and are supported via a control surface (18f) on a guideway (17b) facing the transport unit, wherein the carriers are distributed evenly over the periphery of the transport unit and have carrier surfaces (18c, 18d), which may be brought into abutment adjacent to the longitudinal edges against the reverse side of a can body (1) when entering the carrier section of the transport unit running vertical to the transport direction, and wherein the structure of the guideway (17b) on its side corresponding to the carrier section is such that the carrier surfaces also maintain their position vertical to the transport direction for a short period when exiting from the carrier section, characterised in that said carriers are integral to their laterally engaging carrier surfaces; that said transport unit merely comprises a revolving element (5; 21); that said carriers, the space between which (L+A) is greater than the length (L) of the can body (1) in transport direction, are provided in the form of a rocker (18), which is connected to said revolving element (5; 21)via the swivelling axes (5b); that said rocker (18) is provided on its front side pointing in transport direction and acting as carrier surface with two feed lugs (18c, 18d), the space between which (za) is greater than the rail width (sb) and which in carrying position may at the same time be supported on both sides adjacent to the longitudinal edges (1a, 1b) on a can body (1), and that said rocker has a control arm (18e) extending beyond the swivelling axis (5b), to which the control surface (18f) is attached.

2. Device according to Claim 1, characterised by an arrangement and structure of the revolving element (5; 21), on the basis of which each can body (1) is carried by said revolving element in transport direction (arrow 2) until a portion of the longitudinal seam (7) - preferably with a length of up to several millimetres - is presented.

3. Device according to one of Claims 1 and 2, characterised in that the rocker (18) is angular in form, when viewed from the side, and, when viewed from the top in the carrying position, is U-shaped with legs (18a, 18b) facing in the opposite direction to the transport direction (arrow 2).

4. Device according to one of Claims 1 to 3, characterised in that the space (za) between the feed lugs (18c, 18d) is smaller than that (sa) between the rocker legs (18a, 18b).

5. Device according to one of Claims 1 to 4, with feed chain drives arranged on both sides of the lower arm, the carrier teeth of which protrude into the area of the can body wall, characterised in that the revolving element (5; 21) may be adjusted relative to said feed chain drives (4a, 4b) by means of a switching unit (19b; 22) so that its rockers (18) have a lead (V) in relation to the parallel carrier teeth (13 or 14) moved with them of up to several millimetres, preferably between one and two millimetres.

6. Device according to Claim 5, characterised in that the feed chain drives (4a, 4b) extend out in transport direction (arrow 2) over the area of the welding unit (6) and opposite to the transport direction over the area of the revolving element (5; 21).

7. Device according to Claim 6, characterised in that the rear end section of the feed chain drives (4a, 4b) extending in transport direction (arrow 2) over the area of the welding unit (6) lies in the exit area of the revolving element (5; 21).

8. Device according to one of Claims 1 to 4, with two friction roller pairs following one another in transport direction with a driven top roller, the first friction roller pair being disposed in front of and the second friction roller pair being disposed behind the area of the welding unit, characterised in that said driven roller (25) of said first friction roller pair (25, 26) is provided with an overriding clutch (25a).

9. Device according to Claim 8, characterised in that the speed of the rockers (18) in transport direction (arrow 2) relative to the circumferential speed of the friction rollers (25 to 28) is adjusted to be higher by about the percentage by which the space (L+A) between the rockers (18) exceeds the length (L) of the can bodies (1) in transport direction.

10. Device according to one of Claims 1 to 9, characterised in that the revolving element is provided in the form of an endless chain (5) with bearing brackets (5a), on which the rockers (18) are supported by their legs (18a, 18b).

11. Device according to one of Claims 1 to 9, characterised in that the revolving element is provided in the form of a rotating disc (21), on which the rockers (18) are supported by their legs (18a, 18b).

## Revendications

1. Dispositif d'alimentation d'ébauches (1) de boites, de forme arrondie, dans la zone d'une unité de soudage, sous l'action de laquelle les bords longitudinaux (1a, 1b) des ébauches (1) sont raccordés l'un à l'autre par l'intermédiaire d'un cordon longitudinal, ce dispositif comportant un bras inférieur (8) s'étendant dans la direction de transport et un rail (3) fixé à lui, dans des rainures longitudinales (3c, 3d) duquel les bords longitudinaux sont guidés, comportant une unité de transport tournant sans fin, maintenue au-dessus de l'ébauche (1) et comportant des entraîneurs, fixés sur l'unité de transport en pouvant se déplacer autour de l'axe de pivotement (5b) disposé transversalement par rapport à la direction de transport (2) et s'appuiyant, par l'intermédiaire d'une surface de commande (18f), sur un chemin de guidage (17b) tourné vers l'unité de transport, étant entendu que les entraîneurs, répartis régulièrement sur la périphérie de l'unité de transport, présentent des surfaces entraînantes (18c, 18d) qui, lors de l'entrée dans la zone entraînante de l'unité de transport, en étant disposés perpendiculairement à la direction de transport, peuvent être mises en contact avec la face arrière d'une ébauche (1) de boîte, à côté des bords longitudinaux de cette dernière, et étant entendu que le chemin de guidage (17b) est, sur sa face correspondant à la zone entraînante, réalisé de telle façon que les surfaces d'entraînement conservent un certain temps leur position d'entraînement, perpendiculairement à la direction de transport, même quand elles ressortent de la zone entraînante,
caractérisé en ce que
- les entraîneurs constituent une seule pièce avec leurs surfaces entraînantes à attaque latérale,
- l'unité de transport est simplement constituée d'un organe tournant sans fin (5; 21),
- les entraîneurs, dont la distance réciproque (L + A) est plus grande que la longueur (L) de l'ébauche (1) dans le sens du transport, sont réalisés sous la forme de pièces oscillantes (18), raccordées à l'organe tournant sans fin (5; 21) par l'intermédiaire des axes de pivotement (5b),
- la pièce oscillante (18) comporte, comme surface entraînante, sur sa face avant tournée dans la direction de transport, deux tenons d'entraînement (18c, 18d), dont la distance de l'un par rapport à l'autre (za) est plus grande que la largeur du rail (sb) et qui, en position d'entraînement, peuvent s'appuyer sur une ébauche (1) de boîte, simultanément des deux côtés situés de part et d'autre des bords longitudinaux (1a, 1b),
- la pièce oscillante présente un bras de commande (18e) dépassant vers l'extérieur, sur lequel est rapportée la surface de commande (18f).

2. Dispositif suivant la revendication 1, caractérisé par la disposition et la réalisation de l'organe tournant sans fin (5; 21), permettant, par son action, d'entraîner avec lui chaque ébauche (1) de boîtedans le sens de transport (flèche 2), jusqu'à ce qu'une partie du cordon longitudinal (7) se présente déjà en avant - de préférence avec une longueur atteignant plusieurs millimètres.

3. Dispositif suivant la revendication 1 ou la revendication 2, caractérisé en ce que la pièce oscillante (18) - en vue de profil - est réalisé de façon à former un angle, et en ce que - en vue de dessus, en position d'entraînement - elle est réalisée en forme de U comportant ses branches (18a, 18b) dirigées dans le sens opposé à la direction de transport (flèche 2).

4. Dispositif suivant l'une quelconque des revendications 1 à 3, caractérisé en ce que la distance réciproque (za) des tenons d'entraînement (18c, 18d) est plus petite que celle (sa) des branches (18a, 18b) de la pièce oscillante.

5. Dispositif suivant l'une quelconque des revendications 1 à 4, comportant des entraînements par chaîne disposés sur les deux côtés du bras inférieur, dont les dents d'entraînement dépassent latéralementdans la zone de la paroi de l'ébauche de boîte, caractérisé en ce que l'organe tournant sans fin (5; 21) est, au moyen d'un organe de coupure (19b; 22), réglable par rapport à l'entraînement par chaîne (4a, 4b), de telle façon que ses pièces oscillantes (18) présentent, par rapport aux dents d'entraînement (respectivement 13 et 14) se déplaçant avec elles en gardant la même direction, une avance (V) d'un ordre de grandeur allant jusqu'à plusieurs millimètres, de préférence compris entre 1 à 2 millimètres.

6. Dispositif suivant la revendication 5, caractérisé en ce que les entraînements par chaîne (4a, 4b) dépassent vers l'extérieur, dans le sens du transport (flèche 2), au-delà de la zone de l'unité de soudage (6) et, dans le sens opposé au transport, au-delà de la zone de l'organe tournant sans fin (5; 21).

7. Dispositif suivant la revendication 6, caractérisé en ce que la partie d'extrémité, tournée vers l'arrière, des entraînements par chaîne (4a, 4b), qui dépassent vers l'extérieur, dans le sens du transport (flèche 2), au-delà de la zone de l'unité de soudage (6), se trouve dans la zone de sortie de l'organe tournant sans fin (5; 21).

8. Dispositif suivant l'une quelconque des revendications 1 à 4, comportant deux couples de galets de frottement se suivant l'un l'autre dans le sens du transport, avec le galet supérieur entraîné, le premier couple de galets étant placé avant la zone de soudage et le deuxième couple de galets étant placé après elle, caractérisé en ce que le galet entraîné (25) du premier couple de galets (25, 26) est muni d'un accouplement à roue libre (25a).

9. Dispositif suivant la revendication 8, caractérisé en ce que la vitesse des pièces oscillantes (18) dans le sens du transport (flèche 2) est réglée plus grande, par rapport à la vitesse périphérique des galets de frottement (25 à 28), d'une quantité sensiblement égale au pourcentage dont la distance réciproque (L+A) des pièces oscillantes (18) dépasse de la longueur (L) des ébauches (1) de boîtes.

10. Dispositif suivant l'une quelconque des revendications 1 à 9, caractérisé en ce que l'organe tournant sans fin est réalisé sous la forme d'une chaîne sans fin (5) comportant des sabots d'appui (5a), sur lesquels les pièces oscillantes (18) s'appuient par l'intermédiaire de leurs branches (18a, 18b).

11. Dispositif suivant l'une quelconque des revendications 1 à 9, caractérisé en ce que l'organe tournant sans fin est réalisé sous la forme d'un disque tournant (21), sur lequel les pièces oscillantes (18) s'appuient par l'intermédiaire de leurs branches (18a, 18b).
